# EUROPEAN PATENT APPLICATION

(11) **EP 4 787 803 A1**
(43) Date of publication of application: **05.08.2026**
(21) Application number: 25305130.4
(22) Date of filing: 30.01.2025
(51) Int. Cl.: H04L 45/00, H04L 43/04, H04L 43/06, H04L 45/02

(54) **SYSTEM AND METHOD FOR STORING AND QUERYING BGP ROUTING DATA**

(71) Applicant: Université de Strasbourg, 67000 Strasbourg (FR); Centre National de la Recherche Scientifique, 75016 Paris (FR); UNIVERSITE CATHOLIQUE DE LOUVAIN, 1348 Louvain-la-Neuve (BE)
(72) Inventor: PELSSER, Cristel, 1348 Louvain-la-Neuve (BE); ALFROY, Thomas, 67100 Strasbourg (FR); HOLTERBACH, Thomas, 67100 Strasbourg (FR)
(74) Representative: Novagraaf Technologies

(57) **Abstract**

A system for storing and querying BGP routing data. The system comprises a relational database (330) comprising a set of tables configured to store lossless compressed BGP routing data. The set of tables includes at least one indirection table. There is an indirection table per BGP route attribute among a set of at least one BGP route attribute, each indirection table storing distinct values of the considered BGP route attribute and associating each of the stored values with a unique identifier. The set of tables includes at least one main table storing BGP routing data sets, each BGP routing data set including at least one unique identifier from at least one indirection table but not the associated BGP route attribute value. The system comprises an API (320) configured to generate Database queries to the relational database. The API provides entry points corresponding respectively to primitive functions. The API is adapted to convert a call to any of the primitive functions into at least one database query to one or more of the set of tables.

## Description

### TECHNICAL FIELD

Various example embodiments relate generally to a system for storing and querying Border Gateway Protocol, BGP, routing data, a method for querying BGP routing data and a method for storing and providing BGP routing data.

### BACKGROUND

BGP routing data is collected from BGP routers by devices usually named "route collectors" and may be stored by a data collection platform in one or more databases. The BGP routing data may include RIB (Routing Information Base) dumps and/or BGP updates.

A RIB dump corresponds to a set of entries (e.g., a snapshot) of a RIB at a specific moment in time for a specific BGP router that exports its routing data to a route collector and thus acts as vantage point (VP). Each RIB for a single VP is periodically dumped by the route collector. Each RIB includes BGP attributes (e.g., AS path, community values) for every IP prefix observed by the VP. A RIB may contain about 1 million of entries (e.g. rows), with an entry for each IP prefix.

A BGP update corresponds to a data set transmitted in a BGP routing message. A BGP routing message is a message used to exchange connectivity information between two BGP routers. In addition to the IP addresses and AS numbers of the two BGP routers, a BGP routing message includes usually three main components: (i) the Network Layer Reachability Information (NLRI) field which lists IP prefixes that are reachable through the sending router; (ii) the BGP route attributes, which includes characteristics about the reachable routes; and (iii) the Withdrawn Routes field, which lists IP prefixes that are no longer reachable through the sending router.

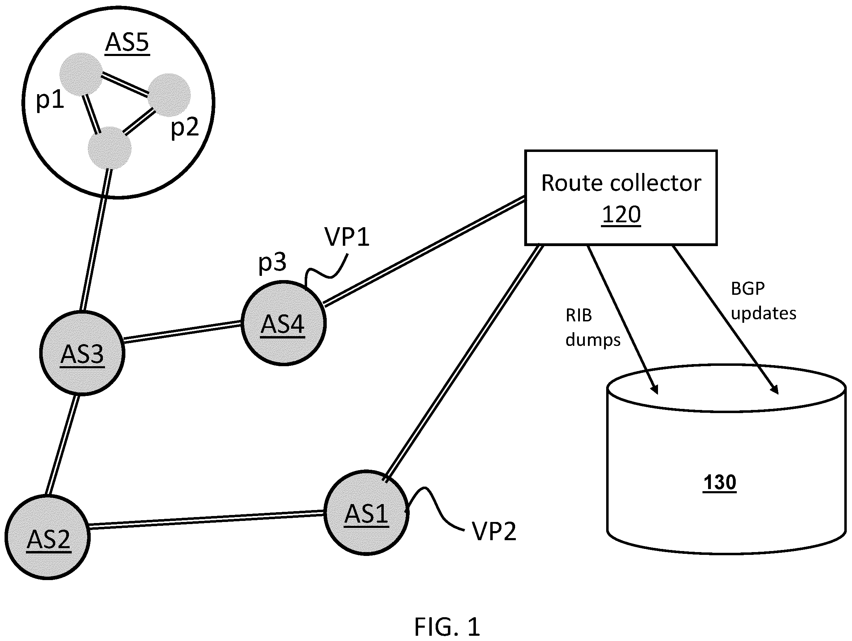

FIG. 1 illustrates an example scenario for BGP routing data collection involving autonomous systems AS1 to AS5, a route collector 120 and a data collection platform 130.

Each Autonomous System (AS) on the Internet owns one or more IP prefixes, i.e., where an IP prefix corresponds to a set of contiguous IP (Internet Protocol) addresses. The autonomous systems use BGP routing messages to exchange reachability information about their IP prefixes with their neighbouring autonomous systems.

In the simplified example of FIG. 1, the autonomous systems AS1 and AS4 have configured their routers to act as VPs VP1 and VP2 respectively. A BGP Vantage Point refers to a BGP router that sets up a BGP session with a route collector and exports the received BGP routing messages (i.e. BGP updates, which can contain advertisements or withdrawals) to this route collector.. Vantage points are used for understanding and troubleshooting the behaviour of BGP across the internet or within an AS. Each VP provides a unique and local view over some of the BGP routes exchanged between ASes. This local view depends on the location of the VP on the Internet and on the configured BGP policies by the ASes on the Internet. The BGP routes visible at one vantage point might differ from those visible at another, depending on factors like routing policies, AS relationships, and geographical placement.

In the example of FIG. 1, AS4 originates IP prefix p3, while AS5 originates IP prefixes p1 and p2. For simplicity, it is assumed here that BGP has converged and the updates exported by AS1 and AS4 following two link-flap events are analysed: one between AS3 and AS5, and another between AS2 and AS3. A flap refers to a link going down and being restored shortly afterward. For example, after the second flap, AS2 sends a BGP update message to AS1 with p1, p2 and p3 in the withdrawn route field, i.e., these IP prefixes are no longer reachable through AS2. Once the connectivity is restored, AS2 advertises the reachable IP prefixes via two separate BGP updates. The first update includes both p1 and p2 as these two IP prefixes share identical attribute values and their AS path is identical, i.e. the AS path includes AS5-AS3-AS2. The second update includes p3 in the NLRI field with the AS path AS4-AS3-AS2.

The BGP routing data is highly redundant resulting in suboptimal storage and increasing the time required to retrieve relevant BGP routing data.

Currently, BGP routing data is stored in the MRT (Multi-threaded Routing Toolkit) file format, a standardized format developed decades ago to store data across multiple routing protocols. However, MRT is not specifically optimised for BGP routing data and lacks advanced compression strategies tailored to the unique characteristics of BGP data. Further, because MRT uses a binary-based, line-by-line format, making it impossible to retrieve specific portions of data directly and efficiently.

### SUMMARY

According to some aspects, there is provided the subject matter of the independent claims. Some further aspects are defined in the dependent claims.

The embodiments, examples and features, if any, described in this specification that do not fall under the scope of protection are to be interpreted as examples useful for understanding the various embodiments or examples that fall under the scope of protection.

According to a first aspect, a system is configured to store and query Border Gateway Protocol, BGP, routing data. The system comprises: (a) a relational database comprising a set of tables configured to store lossless compressed BGP routing data, wherein the set of tables includes at least one indirection table, wherein there is an indirection table per BGP route attribute among a set of at least one BGP route attribute, each indirection table storing distinct values of the considered BGP route attribute and associating each of the stored values with a unique identifier, wherein the set of tables includes at least one main table storing BGP routing data sets, each BGP routing data set including at least one unique identifier from at least one indirection table but not the associated BGP route attribute value; (b) an application program interface, API, configured to generate database queries to the relational database, wherein the API provides entry points corresponding respectively to primitive functions, wherein each primitive function is configured to receive one or more search criteria as input and to search for zero or more matching BGP routing data sets by (i) searching for matching BGP route attribute values stored in the at least one indirection table and (ii) retrieving the unique identifiers associated with the matching BGP route attribute values if any to search for zero or more matching BGP routing data sets in the at least one main table, wherein the API is adapted to convert a call to any of the primitive functions into at least one database query to one or more of the set of tables.

The set of tables may comprise a first indirection table storing, in each row among a first set of rows, a unique identifier associated with a group of IP prefixes used in BGP updates; wherein the at least one main table may comprise a BGP update table storing, in each row among a second set of rows, a BGP update as a dataset including: a timestamp and a first identifier associated with a group of IP prefixes for which the considered BGP update is applicable.

The set of at least one BGP route attribute may comprise the Autonomous System, AS, path attribute and the Community attribute. The at least one indirection table may comprise: a second indirection table storing, in each row among a set of rows, a unique identifier associated with a value of the AS path attribute; and a third indirection table storing, in each row among a set of rows, a unique identifier associated with a value of the Community attribute. Each dataset in a row among the second set of rows in the BGP update table may comprise: a second identifier associated with a value of the AS path attribute and a third identifier associated with a value of the Community attribute.

The at least one main table may comprise a RIB reference table storing, in each row among a third set of rows, a RIB entry of a reference Routing Information Base, RIB, dump as a dataset including: a timestamp, an IP prefix, an identifier associated with a value of the AS path attribute and an identifier associated with a value of the Community attribute.

The at least one main table may comprise a RIB difference table storing, in each row among a fourth set of rows, a RIB entry of a RIB difference that differs from the reference RIB dump as a dataset including: a timestamp, an IP prefix, an identifier associated with a value of the AS path attribute and an identifier associated with a value of the Community attribute.

The primitive functions may comprise a first primitive function configured to retrieve, from the BGP update table, a list of BGP updates matching one or more criteria defined in parameters of the first primitive function.

The primitive functions may comprise a second primitive function configured to search, in at least one of the RIB reference table and the RIB difference table, for zero or more matching RIB entries, wherein the second primitive function accepts multiple parameters to define one or more search criteria and/or to filter the retrieved list.

The relational database may comprise BGP routing data for several vantage points. The primitive functions may comprise a third primitive function configured to search for zero or more matching vantage points, wherein the third primitive function accepts multiple parameters used to define one or more search criteria and/or to filter the retrieved list.

The relational database may be configured to use an index defining a tree-based data structure for searching for unique identifiers associated with a given BGP attribute in the at least one main table.

The system may comprising a chatbot configured to receive a prompt in natural language and to convert the prompt into a software code, wherein the software code may comprise at least one call to at least one of the primitive functions.

The chatbot may be based on a Large Language Model, LLM configured to convert a question in natural language into a corresponding software code; wherein the LLM is trained using a ground truth dataset that includes a set of elementary questions in natural language along their corresponding software codes, wherein each of the corresponding software codes may comprise at least one call to at least one of the primitive functions.

The set of elementary questions may be inferred from a list of human generated texts pertaining to BGP routing data.

Each of the elementary questions may define one or more search criteria, wherein the elementary questions are adapted to be combined to form complex questions combining the one or more search criteria of the combined elementary questions.

According to a second aspect, a method for storing and providing Border Gateway Protocol, BGP, routing data is disclosed. The method comprises: storing BGP routing data in a relational database, the relational database comprising a set of tables configured to store lossless compressed BGP routing data, wherein the set of tables includes at least one indirection table, wherein there is an indirection table per BGP route attribute among a set of at least one BGP route attribute, each indirection table storing distinct values of the considered BGP route attribute and associating each of the stored values with a unique identifier; wherein the set of tables includes at least one main table storing BGP routing data sets, each BGP routing data set including at least one unique identifier from at least one indirection table but not the associated BGP route attribute value. The method comprises: providing, an application program interface, API, configured to generate database queries to the relational database, wherein the API provides entry points corresponding respectively to primitive functions, wherein each primitive function is configured to receive one or more search criteria as input and to search for zero or more matching BGP routing data sets by (i) searching for matching BGP route attribute values stored in the at least one indirection table and (ii) retrieving the unique identifiers associated with the matching BGP route attribute values if any to search for zero or more matching BGP routing data sets in the at least one main table, wherein the API is adapted to convert a call to any of the primitive functions into at least one database query to one or more of the set of tables.

According to a third aspect, a method for querying Border Gateway Protocol, BGP, routing data is disclosed. The BGP routing data is stored in a relational database, the relational database comprising a set of tables configured to store lossless compressed BGP routing data. The set of tables includes at least one indirection table, wherein there is an indirection table per BGP route attribute among a set of at least one BGP route attribute, each indirection table storing distinct values of the considered BGP route attribute and associating each of the stored values with a unique identifier. The set of tables includes at least one main table storing BGP routing data sets, each BGP routing data set including at least one unique identifier from at least one indirection table but not the associated BGP route attribute value. The method comprises: generating and/or executing a software code including at least one call to a primitive function of an application program interface, API, to query the relational database, wherein the API is configured to generate database queries to the relational database, wherein the API provides entry points corresponding respectively to primitive functions, wherein each primitive function is configured to receive one or more search criteria as input and to search for zero or more matching BGP routing data sets by (i) searching for matching BGP route attribute values stored in the at least one indirection table and (ii) retrieving the unique identifiers associated with the matching BGP route attribute values if any to search for zero or more matching BGP routing data sets in the at least one main table. The API is adapted to convert a call to any of the primitive functions into at least one database query to one or more of the set of tables.

According to another aspect, an apparatus comprises means for performing one or more or all steps of any method disclosed herein. The means may for example include at least one processor and at least one memory storing instructions that, when executed by the at least one processor, cause the apparatus to perform one or more or all steps of any method disclosed herein. The means may for example include circuitry (e.g., processing circuitry) configured to perform one or more or all steps of any method disclosed herein.

According to another aspect, an apparatus comprises at least one processor and at least one memory storing instructions that, when executed by the at least one processor, cause the apparatus to perform one or more or all steps of any method disclosed herein. The instructions, when executed by the at least one processor, may cause the apparatus to perform one or more or all steps of any method disclosed herein.

According to another aspect, a computer program comprises instructions that, when executed by at least one processor of an apparatus, cause the apparatus to perform one or more or all steps of any method disclosed herein.

According to another aspect, a non-transitory computer readable medium comprises computer program instructions stored thereon that, when executed by at least one processor of an apparatus, cause the apparatus to perform one or more or all steps of any method disclosed herein.

### BRIEF DESCRIPTION OF THE DRAWINGS

Some example embodiments will now be described with reference to the accompanying drawings.
FIG. 1, already described, illustrates an example scenario for BGP routing data collection.
FIGS. 2A-C shows a database scheme for a relational database for storing and querying BGP routing data according to an example.
FIG. 3 illustrates the performance of the database scheme in term of compression.
FIG. 4A is a schematic diagram of a system for storing and querying BGP routing data according to an example.
FIG. 4B is a schematic diagram of a system for storing and querying BGP routing data according to an example.
FIG. 5 is a diagram illustrating optimising of a general purpose LLM for a chatbot adapted for answering domain-specific questions about BGP data according to an example.
FIG. 6A is a flowchart illustrating a method for storing and querying BGP routing data according to an example.
FIG. 6B is a flowchart illustrating a method for storing and querying BGP routing data according to an example.
FIG. 7 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. The example embodiments are given by way of illustration only and thus are not limiting of this disclosure. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

A lossless compression scheme is disclosed that effectively compresses BGP routing data (e.g., BGP updates and/or RIB dumps) and preserves all information without any data loss. A relational database is used to store the lossless compressed BGP routing data in a set of tables configured and thereby efficiently query (e.g., using SQL language or other relational database query language like JOOQ, LINQ, QUEL, etc) and retrieve the BGP data from these tables.

A first layer of compression is used by leveraging redundancy between BGP attributes in BGP routing data and using one or more attribute-wise indirection tables. To achieve this first layer of compression, the set of tables includes one or more indirection tables. An indirection table may be used per BGP route attribute among a set of at least one BGP route attribute. These attribute-wise indirections optimise storage by leveraging redundancies in attribute values, both across RIB dumps and BGP updates over time, as well as within individual RIB dumps. In practice, each indirection table stores distinct values (i.e., distinct two by two) of the considered BGP route attribute and associates each of the stored values with a unique identifier. This unique identifier is used as pointer to the associated BGP route attribute value stored in the indirection table.

Preferably, an indirection table is used for each redundant BGP route attribute such as, at least the AS path and Community attribute. The AS path corresponds to the list of autonomous systems that a packet must go through to reach the announced IP prefixes. The Community attribute is a label (or a value) attached to a BGP update that is either informative or allow BGP routers that process this BGP updates to take some actions based on the label (or value) These two attributes are attached to a given IP prefix (again, it's a per-IP prefix granularity), but most of the time, they are not unique to this IP prefix, and other IP prefixes can share the exact same BGP attributes. Therefore, using a level of indirection for such attributes allows to save storage space as each duplicated attribute does not need to be stored multiple times but only once plus a 4-bytes ID for the unique identifier. It is to be noted that distinct and independent tables of indirections for the AS path and community are implemented for AS path and Community attribute as these two attributes are not necessarily correlated in the BGP routing data.

It can be observed that most of the BGP attributes appear significantly more often than once, resulting in a large portion of disk space saved thanks to the use of a table of indirection for the concerned BGP attributes. For instance, for the AS path, 10% of the AS paths of length between 3 and 4 appear about 19 times over a one-month period: thus, by using the indirection table for the AS path, the associated storage space is thereby divided by about 19. While this optimisation is useful in the case of BGP updates, as a given BGP attribute value can appear multiple times over time, it is even more useful in the case of entries of RIB dumps. In fact, not only BGP attribute values can be repeated over time, but multiple entries within the same RIB dump at a given time can share the same BGP attribute value.

The set of tables includes at least one main table storing BGP routing data sets. A BGP routing data set may correspond to a BGP update or to a RIB entry. A BGP routing data set includes at least one unique identifier from at least one indirection table but not the associated BGP route attribute value, thereby saving storage space as a unique identifier uses much less space than the corresponding BGP route attribute value (e.g., the AS path).

A second layer of compression may be used, wherein a level of indirection is provided by associating each group of IP prefixes in a BGP update with a unique identifier. As BGP reachability information in BGP updates is defined at a per-IP prefix granularity, a naive way to exchange and store BGP updates would be to do it IP prefix by IP prefix (e.g., one entry per IP prefix in a database). However, this would lead to suboptimal storage scheme, as many IP prefixes can share the same reachability information. Thus, the second layer of compression may be used, based on the observation that, if a set of IP prefixes experience the same reachability update at a given time, it is likely that the exact same set of IP prefixes will experience other identical reachability updates in the future. For instance, it can be observed that about 10% of the sets of IP prefixes with between 5 and 20 IP prefixes appear 25 times or even more during a one-month period in the BGP updates. Thus, redundancies across time between IP prefixes used in BGP updates can be leveraged. The second layer of compression reduces redundancy over time. To achieve this second layer of compression, an indirection table (hereafter the prefix table) is used for storing, in each row among a first set of rows, a unique identifier associated with a set of IP prefixes used in one or more BGP updates. This unique identifier may be used as pointer to the set of IP prefixes. Also, a BGP update table is used for storing, in each row among a second set of rows, a BGP update as a data set including: a timestamp and a first identifier from the prefix table, wherein the first identifier is associated with a set of IP prefixes for which the considered BGP update is applicable. This results in a significant amount of disk space saved. In fact, the unique identifier may be 4-bytes long, while the average size of a set of IP prefix is estimated to be 178-bytes.

A third layer of compression may be used so as to leverage redundancy between RIB dumps by storing only the differences between successive RIB dumps, leveraging similarities across time. According to this third layer of compression, an initial RIB serving a reference RIB is stored in its entirety and, for each subsequent RIB, only the RIB entries that differ from the initial RIB. This method allows to retain a small subset of each RIB dump without losing any information. The proportion of identical entries between two consecutive RIB dumps is high. To estimate this proportion, it was assumed that two RIB entries are identical if they have the same IP prefix and the same BGP attribute values. With such assumption, it has been observed two RIB dumps separated by 30 days contain about 85% identical entries. This means that by fully storing only the initial RIB of each month, one would only need to store a maximum of 15% of the new entries in the subsequent RIBs.

Each of the layers of compression can be use on its own or be combined two by two or all together.

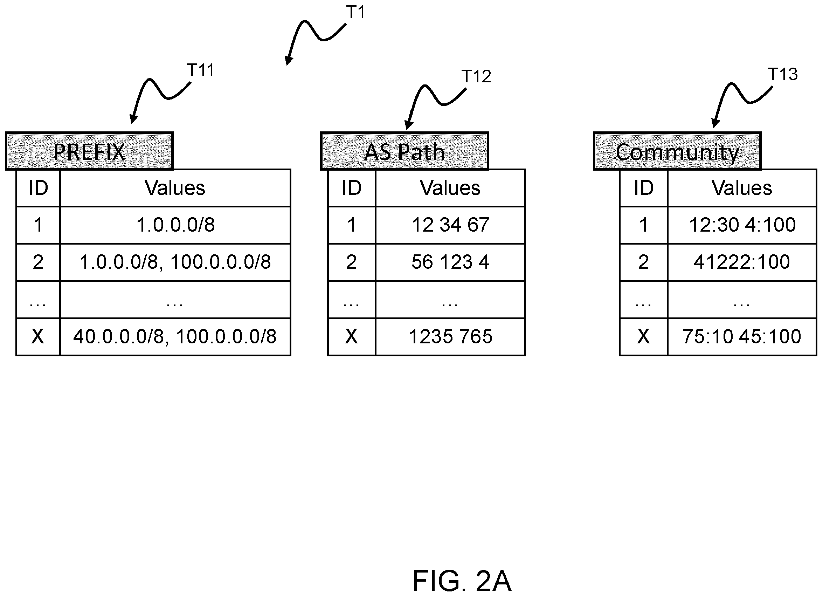

FIGS. 2A-C shows a database scheme providing the three layers of compression.

For BGP data, a relational database schema is particularly advantageous, as it supports complex queries and allows for targeted data retrieval using indexing, eliminating the need to process the entire table.

FIG. 2A shows simplified examples a set T1 of indirection tables T11, T12, T13.

A first indirection table T11 (prefix table) is used for associating a unique identifier (ID) to each group of IP prefixes among a plurality of groups of IP prefixes used in one or more BGP updates.

A second indirection table T12 (AS path table) is used for associating a unique identifier (ID) to each AS Path value among a plurality of AS Path values used in one or more BGP updates and/or in one or more RIB dumps.

A third indirection table T13 (Community table) is used for associating a unique identifier (ID) to each Community attribute value among a plurality of Community attribute values used in one or more BGP updates and/or in one or more RIB dumps.

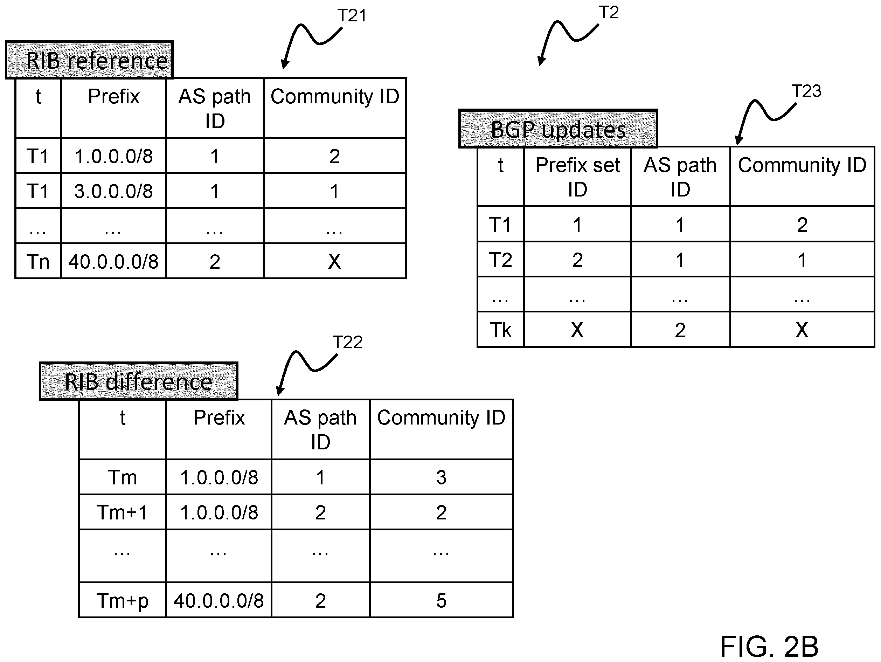

FIG. 2B shows simplified examples of a set T2 of main tables T21, T22, T23 using a unique identifier from one of the indirection tables T11, T12, T13 to identify an associated value of a data field (group of IP prefixes, AS path or Community attribute in the example of FIG. 2A) instead of storing the associated value each time an indirection table exists for the concerned data field.

A first main table T21 (RIB reference table) is a table storing a reference RIB dump with IDs that map to the corresponding AS path and community values. Each RIB entry (each row of the table) corresponds to a data set including: a timestamp, a prefix, a unique identifier (from table T12) associated with an AS path value, a unique identifier (from table T13) associated with a Community attribute value.

A second main table T22 (RIB difference table) is a table storing incremental differences with respect to the reference RIB as new RIB entries with IDs that map to the corresponding AS path and community values. Each new RIB entry (each row of the table) corresponds to a data set including: a timestamp, one or more prefixes, a unique identifier (from table T12) associated with an AS path value, a unique identifier (from table T13) associated with a Community attribute value.

A third main table T23 (update table) is a table storing BGP updates with IDs that map to the corresponding IP prefix group, AS path and community values. Each BGP update (each row of the table) corresponds to a data set including: a timestamp, a unique identifier (from table T11) associated with a group of prefixes, a unique identifier (from table T12) associated with an AS path value, a unique identifier (from table T13) associated with a Community attribute value.

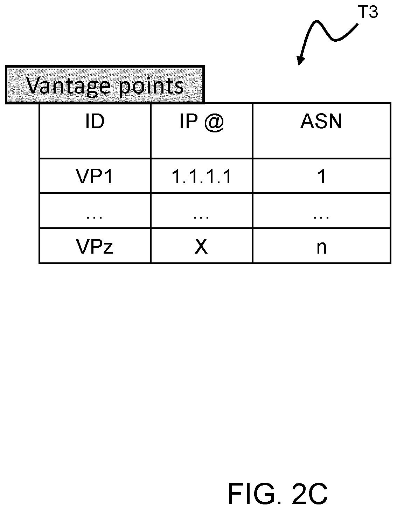

FIG. 2C shows a simplified example of vantage point table T3.

Each entry in table T2 includes an identifier of a vantage point, an IP address of the vantage point and an identifier of an associated AS.

In one or more or all embodiments, the relational database is organized such that there is a separate set T1 of indirection tables per vantage point and a separate set T2 of main tables per vantage point such that there is at least six tables T11, T12, T13, T21, T22, T23 for each VP.

In one or more or all embodiments, the relational database may be configured to use an index defining a tree-based data structure for searching for unique identifiers in at least one of the tables T21, T22, T23. Indexes (for example indexes provided by PostgreSQL) create a structured reference on a specific column within a table, allowing rapid searches for matching values in the column.

For example, an index on the timestamp column of the table T21, T22, T23 constructs a red-black tree where each node represents a specific timestamp value and points to all table entries matching that value. This allows retrieval of table entries within a time interval with logarithmic complexity, eliminating the need to process each row sequentially.

While indexes work efficiently on columns with numeric values, they are less effective for string columns when dealing with regular expressions, which is often necessary in BGP data queries. For instance, a user may want to retrieve all BGP updates where a specific AS appears at the end of the AS path. When the raw AS path is stored as a string in each table entry, one has to evaluate the regular expression against each table entry individually, as indexes do not perform well with regular expressions on text data, resulting in high processing times. But when using indirection levels instead of storing raw BGP attributes in each table entry, when a user queries data matching one or more criteria, the unique identifiers associated with the searched attribute values that match the one or more criteria are retrieved from one or more indirection table(s) T11, T12, T13 in a first step. In a second step, the retrieved unique identifiers are used to locate the matching table entries in the relevant main table T21, T22 or T23 by using an index, preferably for each of the columns storing the retrieved unique identifiers in the relevant main table T21, T22 or T23. Despite the fact that the search is performed in two steps, the response time is much faster because the indirection tables storing the mapping between a BGP attribute values and its unique identifier are significantly smaller than the BGP update tables. Thus, searching for matching values (if any) in these indirection tables is *much* faster than doing it on each entry of the main tables T21, T22 or T23. The response time is much faster also because each row in the main tables T21, T22 or T23 stores a unique identifier (i.e. an integer value) for each BGP attribute, it is now possible to use indexes to these columns, avoiding the need to process each entry individually, as an index allows to retrieve integer values with logarithmic complexity thanks to the underlying tree-based structure of the index.

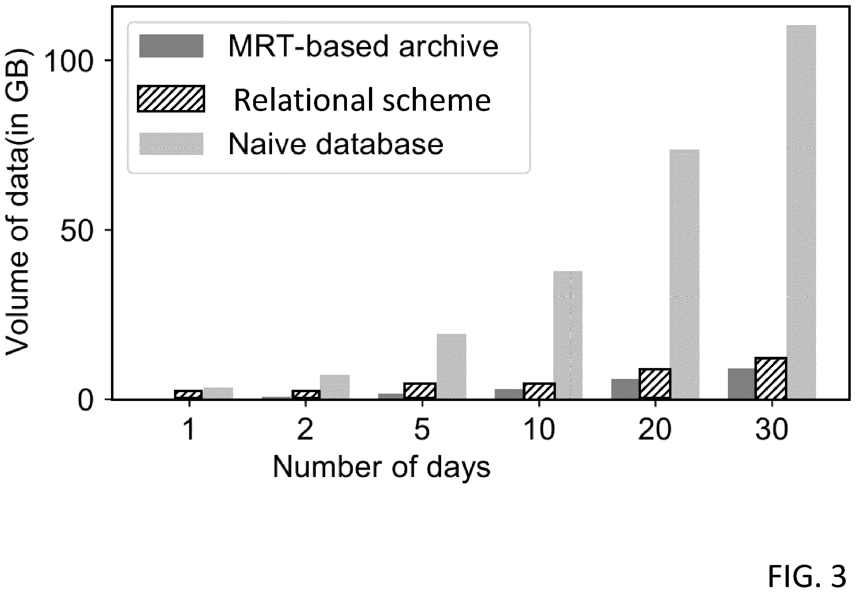

FIG. 3 illustrates the performance of the database scheme in term of data compression.

The effectiveness of the lossless compression scheme can be evaluated by comparing database size (data volume) against two baselines: (i) MRT files compressed with the algorithm "bzip2", which serves as a best case scenario, and (ii) a naive PostgreSQL-based approach that stores raw updates on a per-prefix basis and RIB dumps. The evaluation focuses on data collected during one month. FIG. 3 shows the database size as a function of the number of days. Logically, the naive approach shows a linear growth in database size over time and uses more than 100GB after 30 days. In contrast, with the lossless compression scheme, the database size grows at an increasingly slower rate, following a logarithmic trend, as repeated occurrences of the same data are combined into single entries. After 30 days only, the lossless compression scheme requires about nine times less storage than the naive approach, and is only about one fifth larger than MRT files compressed with "bzip2". While there is no gain in terms of data compression compared to the compressed MRT files, a gain in term of query response time is achieved as detailed herein.

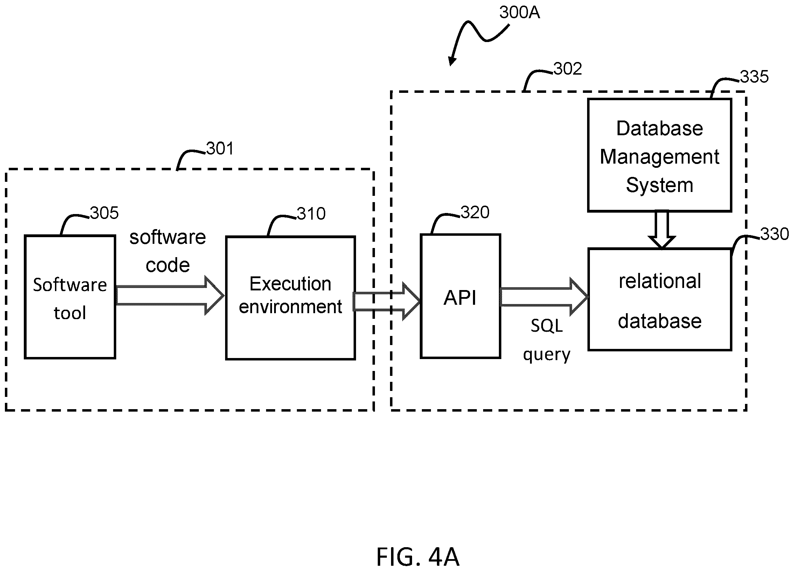

FIG. 4A is a schematic diagram of a system 300A for storing and querying BGP routing data according to an example.

The system 300A includes a user device 301 (e.g., end user computing device) and a data collection platform 302 in (e.g., remote or local) communication with the user device 301. The data collection platform 302 includes a relational database 330 and an application program interface, API, 320 configured to generate queries to the relational database 330. The data collection platform 302 may include a Database Management System 335 associated with the relational database 330.

The relational database 330 comprises a set of tables configured to store lossless compressed BGP routing data. The relational database 330 may apply the database scheme described with reference to FIGS. 2A-2C and include one or more or all of the tables described by reference to FIGS. 2A-2C.

The set of tables may for example include at least one indirection table T11, T12 or T13. There may be an indirection table per BGP route attribute among a set of at least one BGP route attribute. Each indirection table stores distinct values of the considered BGP route attribute and associates each of the stored values with a unique identifier. The unique identifier serves as pointer for accessing to the associated value.

The set of tables may for example include at least one main table T21, T22 or T23 storing BGP routing data sets. Each BGP routing data set includes at least one unique identifier from at least one indirection table instead of the associated BGP route attribute value.

The API 320 is configured to generate queries to the relational database 330. The API 320 provides entry points corresponding respectively to primitive functions. The API 320 may be adapted to convert a call to any of the primitive functions into at least one database query (e.g., SQL query) to one or more of the set of tables.

Each primitive function is configured to receive one or more search criteria as input and to search for zero or more matching BGP routing data sets. A primitive function may also receive zero search criteria, in which case in returns the entire RIB dump or respectively all BGP updates within a time interval. The matching BGP routing data sets may be searched by (i) searching for matching BGP route attribute values (if any) stored in at least one indirection table T11, T12 or T13 and (ii) retrieving the unique identifiers associated with the matching BGP route attribute values if any in order to search for the one or more matching BGP routing data sets in at least one main table T21, T22 or T23.

Optionally, the user device 301 in the system 300A may include:
- a software tool 305 configured to generate software code including one or more calls to one or more of the primitive functions of the API 320; and/or
- an execution environment 310 for executing the software code and calling the one or more of the primitive functions of the API 320.

The distribution of the functional blocks 305, 310, 320 between the user device 301 and the platform 302 may be different.

The software tool 305 may be or include an editor (e.g., a text editor and/or a software code editor) adapted for generating software code configured to extract BGP routing data from the relational database, the software code comprising at least one call to at least one of the primitive functions.

The software tool 305 may be or include a chatbot configured to receive a prompt in natural language and to convert the prompt into a software code, wherein the software code comprises at least one call to at least one of the primitive functions.

The software code may be written in various languages, such as C, C++, Python, etc. A library may be provided for compiling and/or executing the software code by the execution environment 310. For each of the entry points of the API, the library includes a primitive function adapted for calling the considered entry point.

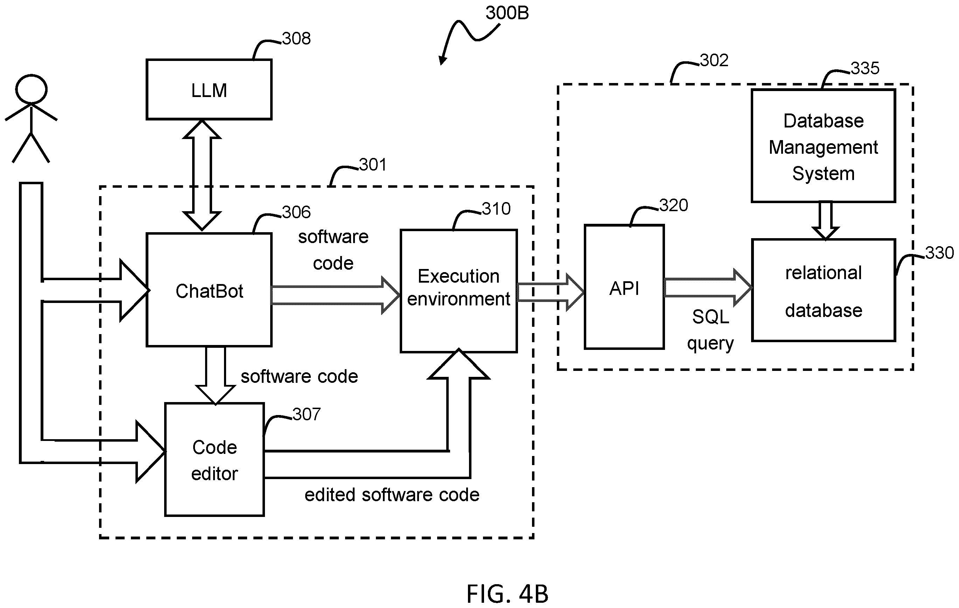

FIG. 4B is a schematic diagram of a system for storing and querying BGP routing data according to an example.

The system of FIG. 4B is similar to the system of FIG. 4A except that it includes both an editor 307 and a chatbot 306 that may be used by a user.

As for FIG. 4A, the editor 307 (e.g., a text editor and/or a software code editor) is adapted for generating software code configured to extract BGP routing data from the relational database, the software code comprising at least one call to at least one of the primitive functions. Other aspects described by reference to FIG. 4A will not be repeated for FIG. 4B for the sake of brevity.

As for FIG. 4A, the chatbot 306 is configured to receive a prompt in natural language and to convert the prompt into a software code, wherein the software code comprises at least one call to at least one of the primitive functions. Other aspects described by reference to FIG. 4A will not be repeated for FIG. 4B for the sake of brevity.

With the system of FIG. 4B, the user may use the editor 307 and/or the chatbot 306 to generate software code. For example, the user may:
- provide a user prompt as input to the chatbot to generate a software code which can be edited (by the user or another user) using the editor 307 to generate an edited software code provided to the execution environment 310; or
- use directly the editor 307 to generate manually a software code and provide the manually generated software code to the execution environment 310 for execution; or
- use only the chatbot 306 to generate automatically a software code and provide the automatically generated software code to the execution environment 310 for execution.

In the embodiments of FIG. 4A and/or 4B, the chatbot may be based on a Large Language Model, LLM, 308 configured to convert a prompt in natural language into a corresponding software code. The LLM 308 may be executed locally or on a remote server, while at least the user interface of the chatbot is executed locally by the user device 301.

A general-purpose LLM may be efficient for converting simple or general user prompts into a software code. However, by using a general-purpose LLM, a specific or complex prompt (e.g., targeting a specific domain of knowledge, such as BGP) expressed for example as *"Can you provide a Python code snippet that retrieves the community observed by the vantage point with IP address 193.0.0.56 in the route for IP prefix 8.0.0.0*/*24 on July 20, 2024, at 10:00 PM UTC?"* may be wrongly converted into software code with call to fictious or non-existent API entry points or may be converted to a software code that returns an incorrect output.

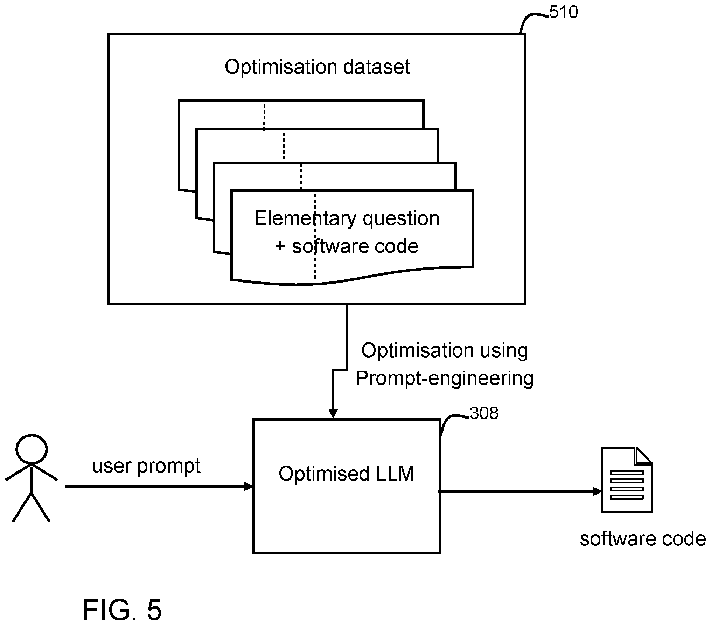

FIG. 5 is a diagram illustrating the optimisation of a general purpose LLM 308 underlying the chatbot according to an example.

As represented by FIG. 5, to improve the accuracy of the LLM 308 in the context of BGP and the matching to the existing API entry points, a dedicated LLM 308 may be derived from a general-purpose LLM by training (e.g., retraining and optimising) the general-purpose LLM using an optimisation dataset 510 that includes a set of elementary questions (e.g. related to BGP routing data and expressed in natural language) along their corresponding software codes used as ground truth for the LLM 308, with a software code per elementary question.

Each of the corresponding software codes used as ground truth may comprise at least one call to at least one of the primitive functions. These corresponding software codes may be verified software codes, tested (and preferably optimised) and corrected by a human so as to perform as requested by retrieving all the relevant BGP routing data in response to the associated elementary question.

Thus, the LLM 308 may be trained for generating software codes suitable for retrieving BGP routing data from the relational database 330 and using the primitive functions corresponding to the entry points of the API.

The set of elementary questions usable for optimisation of the LLM 308 may be inferred from a large set of human generated texts and/or queries pertaining to BGP routing data.

To gather a broad and representative set of BGP-related questions commonly posed by network operators and researchers, various sources may be considered. For example, for the generation of the set of elementary questions for training, a web scraper can be used to download, parse and extract the text content of each email in the NANOG mailing list (see e.g., https://nanog.org/resources/nanog-mailing-lists/) over several years, along with the abstracts and URLs of papers published in leading conferences over several years concerning BGP routing data processing.

After extraction of the text content from these sources, a scoring may be applied (e.g., by using a general-purpose LLM) to assess the likelihood (e.g., on a scale of 0 to 10) that each extracted text includes a BGP routing data analysis. Items scoring above 5 may be flagged as BGP-relevant (positive cases), while those scoring 5 or below may be marked as irrelevant (negative cases) and be discarded. Then, a general-purpose LLM may be used to identify and summarize the BGP-related questions from the retained text content. The extracted questions may be manually reviewed, grouped similar ones, and their phrasing be refined for clarity and consistency to generate the set of elementary questions. By using such approach, a biasing toward specific objectives or particular types of questions can be avoided.

Using such approach for the generation of the set of elementary questions, a set of distinct elementary questions can be obtained. There may be for example at least 20 and up to 100 or more distinct elementary questions. For the optimisation of the chatbot, more or fewer distinct elementary questions may be used, as long as the set of elementary questions is representative of questions that the users are expected to ask.

The elementary questions may include one or more questions related to one or more autonomous systems, for example :
- How many ASes are in the routing system ?
- Identify ASes that are always either at the beginning or at the end of the AS path, meaning that never appear in the middle, and that have at least two different neighbours
- How many ASes appear always at an end of the AS path and never in the middle
- How many ASes always appear at the middle of the AS paths and never at one end?
- Does AS x appear in an AS path used to reach prefix p ?
- Which AS is using AS path prepending, i.e. same AS prepended?

The elementary questions may include one or more questions related to one or more AS paths, for example:
- What is the average length of an AS path in the routing table ?
- Which are the AS paths where AS x appears ?
- What are the paths where AS x is at the origin, i.e. the last AS?
- How often the AS path from AS x to AS y matches the inverted AS path between AS y to AS x?
- What is the percentage of single hop AS paths ?

The elementary questions may include one or more questions related to connectivity, for example:
- Who are AS x neighbours ?
- What is the shortest distance between AS x and AS y in terms of AS hops ?
- Are AS x and AS y connected ?
- Which ASes are connected to AS x without being at the beginning or at the end of the AS path?
- Which proportion of the route pass through AS x ?
- The elementary questions may include time questions, for example:
- When did AS x appear in the routing table ?
- Since when AS x and AS y are connected ?
- Give me time of the last update observed for prefix p for every vantage point
- What is the more recent day for which AS x and AS y appear disconnected from all the vantage points?
- Was there a burst of withdrawals i.e., 2 times more withdrawals than the average on other time periods with the same duration ?
- Give me the number of announcements that were collected for every hour.
- What is the visibility growth in terms number of distinct AS links observed for every VP?

The elementary questions may include one or more questions related to one or more IP prefix, for example:
- Did the last AS in AS paths for prefix p change?
- How many prefixes can we see?
- What are the routing changes for prefix p ?
- Can we see prefix p ?
- Which ASes originate prefix p ?
- How many bogon prefixes are announced by AS x ?
- Among the ASes that announce an IPv4 prefix, what is the proportion that also announce an IPv6 prefix?
- How many 24 AS x is announcing?
- Which prefixes are owned-originated by AS x?

The elementary questions may include one or more questions related to one or more vantage points, for example:
- Rank the vantage points based on the number of updates they collected.
- What is the size of the RIB of peer p?

The elementary questions may include one or more questions related to one or more Community attributes, for example:
- Which updates announce a blackholing communities ?
- Which updates hold community c ?
- Which updates use large communities ?
- How many distinct community values are related to AS x, i.e. how many community values starts with x?
- What are the community values for prefix p ?

Each of the elementary questions defines one or more search criteria, wherein the elementary questions are adapted to be combined to form complex questions combining the one or more search criteria of the combined elementary questions.

The set of elementary questions may relate to attributes such that AS path, Community attribute, connectivity etc. The set of elementary questions may include several categories of questions to allow the trained LLM of the chatbot to behave accurately for a large set of user prompts, for example: elementary questions related to AS search, elementary questions related to AS path search, elementary questions related to Community values search, elementary questions related to AS connectivity search, elementary questions related to timestamps search, elementary questions related to IP prefixes search, elementary questions related to vantage points search.

The set of primitive functions of the API may be designed to be able to answer to each of the elementary questions.

In one or more or all embodiments, the set of primitive functions includes a limited number of primitive functions, for example only 2 or 3 primitive functions. A primitive function may be mapped to a single database query or to several queries.

The primitive functions may include a first primitive function ("get_updates") configured to search, in the BGP update table, for one or more matching BGP updates. The first primitive function may retrieve either a list of one or more matching BGP updates if any, or a count of one or more matching BGP updates if any. This first primitive function can be mapped to at least one database query .

The first primitive function ("get_updates") may accept multiple parameters to define one or more search criteria and/or one or more criteria to filter and/or order the retrieved list. For example, the first primitive function may accept multiple parameters to define search and/or filter and/or order criteria, where these criteria may be based on one or more of: vantage point(s), time interval(s) or timestamp(s), IP prefix(es), AS path(s), or Community value(s). Some of the parameters (e.g., prefix, AS path and community value) may support regular expressions, enabling advanced and flexible filtering operations.

The primitive function "get_updates" may be used as follows.

As a first example, a call to the primitive function "get_updates" may be: *get_updates(vantage_point, start_date*=*"01*/*01*/*2024-00:00:00", end_date="01*/*01*/*2025-00:00:00", aspath_regexp='(^*| *)2914(* |*$)'*, *chronological_order=True, max_updates_to_return=1):*
in which:
- The first parameter specifies the *vantage point* from which to retrieve updates.
- The second parameter defines a time interval, here between January 1, 2024 and January 1, 2025.
- The "aspath_regexp" parameter contains a regular expression that filters AS paths, retaining only those including AS 2914.
- The "chronological_order" parameter is set to True, meaning that updates will be sorted chronologically (from oldest to most recent).
- Finally, the "max_updates_to_return" parameter is configured to return a single update.

These parameters make it possible, for example, to retrieve the first update of the year 2024 containing an AS path with AS 2914, while downloading only a single update, making the operation very fast.

As a second example, a call to the primitive function "get_updates" may be: *get_updates(vantage_point, start_date="07*/*01*/*2024-00:00:00", end_date="07*/*01*/*2024-00:00:00", type_regexp='W')*

In addition to the "vantage_point", "start_date" and "end_date" parameters, a new parameter, "type_regexp" may be used. This parameter accepts a regular expression and filters updates according to their type: either *"Announcements"* (indicated by the symbol "A") or *"Withdrawals"* (indicated by the symbol "W"). The options for this parameter are very simple: A or W. In this example, the value "W' is used, which means that the function will only return *"Withdrawals".*

In addition, the parameter "type_regexp" can be combined with others, such as "return_count". If the value of "return_count" is set to "True", the function "get_updates" counts the number of corresponding *"Withdrawals",* which is useful for identifying potential *"Withdrawal"* bursts, without having to download and process each message individually.

The conversion of a call to the primitive function "get_updates" into Database queries may be performed as follows:
- Step 1: Each call to the "get_updates" function may involve Database queries to the BGP update table T23 to retrieve updates corresponding to the time interval specified in the parameter.
- Step 2: When filters are applied to the prefix, AS path, community values or update type, Database queries are performed in the indirection tables T11, T12, T13 (PREFIX, AS_PATH, COMMUNITY). These queries are used to identify entries that match the specified regular expressions. Once these identifiers have been retrieved, only the updates associated with them are retained.
- Step 3: If updates are to be returned with their actual values from indirection tables T11, T12, T13 (PREFIX, AS_PATH, COMMUNITY), additional Database queries are required to read the indirection tables T11, T12, T13 and replace the identifiers with their actual values. If only a count of updates is required (the optional parameter "return_count" is set to True), no additional reading of indirection tables is necessary. In this case, the function returns only the total number of updates corresponding to the criteria, making the operation faster.

The primitive functions may include a second primitive function ("get_rib") configured to search, in at least one of the RIB reference table and the RIB difference table, for one or more matching RIB entries. The second primitive function may retrieve either a list of one or more matching RIB entries if any, or a count of one or more matching RIB entries if any. This second primitive function can be mapped to a at least one database query .

The second primitive function ("get_rib") may accept multiple parameters to define one or more search criteria and/or one or more criteria to filter and/or order the retrieved list. For example, the second primitive function may accept multiple parameters to define search and/or filter, where these criteria may be based on one or more of: vantage point(s), time interval(s) or timestamp(s), IP prefix(es), AS path(s), or Community value(s). Some of the parameters (e.g., prefix, AS path and community value) may support regular expressions, enabling advanced and flexible filtering operations.

As a first example, a call to the primitive function "get_rib" may be : rib = get_rib(vantage_point, date="07/10/2024- 11:29:11", aspath_regexp='(^| )1853 (|.* )201341($| )|(^| )201341 (|.* ) 1853($| )') in which:
- The first parameter specifies the *vantage point* from which to retrieve the RIB entry.
- The second parameter corresponds to a specific time, here 07/10/2024 at 11:29:11.
- Finally, the "aspath_regexp" parameter contains a regular expression that matches on AS paths and retains RIB entries that have an AS path that includes both AS1853 and AS201341, regardless of their order or position in the path.

The conversion of a call to the primitive function "get_rib" into Database queries may be performed as follows.
- Step 1: Each call to the "get_rib" function may involve Database queries to the RIB difference table T22 and the BGP update table T23 to retrieve the status of the RIB at a given time.
- Step 2: When the "get_rib" function needs to return entries matching a regular expression (on AS path and/or community values), a search is triggered in the indirection tables T11, T12, T13. More precisely, an database query is performed in the AS_PATH indirection table T12 to identify the identifiers corresponding to AS paths containing both AS1853 and AS201341. Once these identifiers have been retrieved, the RIB generated in step 1 is searched, retaining only the entries associated with these identifiers.
- Step 3: Only entries matching the criteria are returned. However, instead of identifiers, the actual values of AS paths and communities are provided. This requires additional reading (via Database queries) of the indirection tables T11, T12, T13 (PREFIX, AS_PATH, COMMUNITY) to retrieve the actual values.

As a second example, a call to the primitive function "get_rib" may be rib = get_rib(vantage_point, date=param_time, community_regexp="( |^) "+str(174)+":.*", return_count=True)

In this example, the "community_regexp" parameter is used to filter RIB entries. Only entries containing a community value starting with 174: will be taken into account. In addition, the "return_count" parameter, set to "True", indicates that the function does not return the corresponding entries, but only the number of entries that have been matched. Thus, the primitive function "get_rib" simply returns an integer (4 bytes).

The primitive functions may include a third primitive function ("get_vantage_points") configured to search for zero or more matching vantage points. The third primitive function may retrieve either a list of one or more matching vantage points if any. This third primitive function can be mapped to a single database query .

The third primitive function ("get_vantage_points") may accept multiple parameters to define one or more search criteria and/or one or more criteria to filter the retrieved list. For example, the third primitive function may accept several parameters to define search and/or filter, where these criteria may be based on one or more of: an IP protocol (IPv4 or IPv6) and one or more IP addresses. Both parameters may require an exact match. No regular expression is used.

For example, the third primitive function ("get_vantage_points") may return a list of one or more matching BGP vantage points (if any) that match one or more criteria that can be specify as parameter (e.g., IP protocol type) of the third primitive function.

For example, the third primitive function ("get_vantage_points") may accept two parameters: an IP protocol (IPv4 or IPv6) and a set of IP addresses, wherein only vantage points with an IP address of the defined IP protocol and within the set of IP addresses are returned. Both parameters may require an exact match, with no use of regular expressions.

As an example, a call to the primitive function "get_vantage_points" may be: selected_vantage_points = get_vantage_points(ip_protocol='IPv4', vantage_points=["1.1. 1.1, 2.2.2.2'])

This example illustrates the use of the "get_vantage_points" function. In this case, the primitive function "get_vantage_points" is used to retrieve only IPv4 vantage points (via the "ip_protocol" parameter) and limit the results to the vantage points whose IP address is either 1.1.1.1 or 2.2.2.2.

Each of these primitive functions may require only at least one query or a few simple queries to produce the result of the primitive function.

The approach based on a limited number (e.g., equal to 3 or smaller than 3) of primitive functions converted by the API into a limited number of database queries applied to compressed BGP routing data provides excellent performances in terms of execution speed and relevance of the search results.

The below table illustrates the performance by comparing the time T1 required to answer some of the elementary questions using state-of-the-art tools versus the time T2 with the system based on the 3 primitive functions, each mapped to at least one database query, when maximum feasible optimisations (e.g., multithreading) are applied to the state-of-the-art tools, whereas the 3 primitive functions use no further optimisation beyond their parameterization. The below table demonstrates that 3 primitive functions provide a substantial speed advantage, allowing to answer all queries significantly faster, with some queries running up to 100 times faster than with current state-of-the-art solutions. Some execution times are given for a number of vantage points equal to 10 or 200 and a time interval equal to 1 day or 10 days.

**Table 1**

| **Query** | **T1 / T2** | | |
|---|---|---|---|
| When did AS x appear in the routing table ? | 52 min /1 min | | |
| Give me time of the last update observed for prefix p for every vantage point | 11h / 4 min | | |

| ***Number of VPs*** | ***10*** | | ***200*** |
|---|---|---|---|
| How many ASes appear always at an end of the AS path and never in the middle | 12 min / 1 min | | 1h / 23 min |
| What is the percentage of single hop AS paths ? | 8 min / 1 min | | 42 min / 20 min |
| Who are AS x neighbours ? | 3 min / 27 sec | | 8 min / 5 min |
| Can we see prefix p ? | 2 min / 9 sec | | 7 min / 1 sec |

| **Time interval** | **1 day** | **10 days** | **1 day** |
|---|---|---|---|
| What are the paths where AS x is at the origin, i.e. the last AS? | 7 min / 13 sec | 1.2 h / 28 sec | 16 min / 2 min |
| Did the last AS in AS paths for prefix p change? | 7 min / 26 sec | 1.2 h / 1 min | 20 min / 3 min |
| Rank the vantage points based on the number of updates they collected | 9 min / 14 sec | 1.1 h / 33 sec | 19 min / 2 min |
| Which updates hold community c ? | 6 min / 11 sec | 1.1 h / 11 sec | 20 min / 1 min |

NB: In the table 1, "x" represent an identifier of an AS, "p" an IP prefix value.

An approach usable for training a LLM 308 to answer questions in a specific way may be the "few-shot prompting" technique. In this approach, the user provides a complete description of the context, as well as a few examples within the prompt, allowing the LLM to get more precise insights about the context and to learn from these examples and generate future responses that align with the given training patterns.

To train the general-purpose LLM, a training prompt provided to the LLM may include the specifications of the primitive functions in the library (i.e., their parameters and their outputs), followed by each of the elementary questions and their corresponding correct software code. This training prompt typically consists of about 15,000 tokens.

To evaluate the chatbot accuracy in generating correct software code for BGP routing data related prompts, each of the elementary questions may be tested individually. For each test, the chatbot may be trained only on the other remaining elementary questions, assessing the ability of the chatbot to answer unfamiliar questions.

By doing so, the chatbot is able to provide a correct software code for 90-95% of the questions. In cases where the initial software code was incorrect, users could request refinements, allowing the chatbot to generate a corrected version.

For each elementary question, various formulations may be generated (manually and/or automatically using a LLM) and the various formulations may be used as input training data to cover potential variations in the phrasing used by the user at inference time. This allows to produce accurate answers however the same question is phrased.

For example, a query like "Who are AS X's neighbours?" can be asked in several ways, such as "Which Autonomous Systems are neighbours of AS 37338?" or "On March 4th, 2024, which AS(es) are neighbours with AS 48152 in both IPv4 and IPv6?" or "At 12:27 am on 3/1/24, which IPv4 neighbours exist for AS 48152?".

Given that there is very a limited number of primitive functions implemented as a library and suitable for responding to any prompt, the software code generated by the chatbot is usually very short.

An example of software code generated in python by the chatbot is given below.

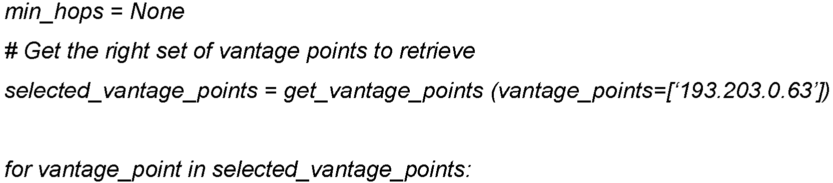

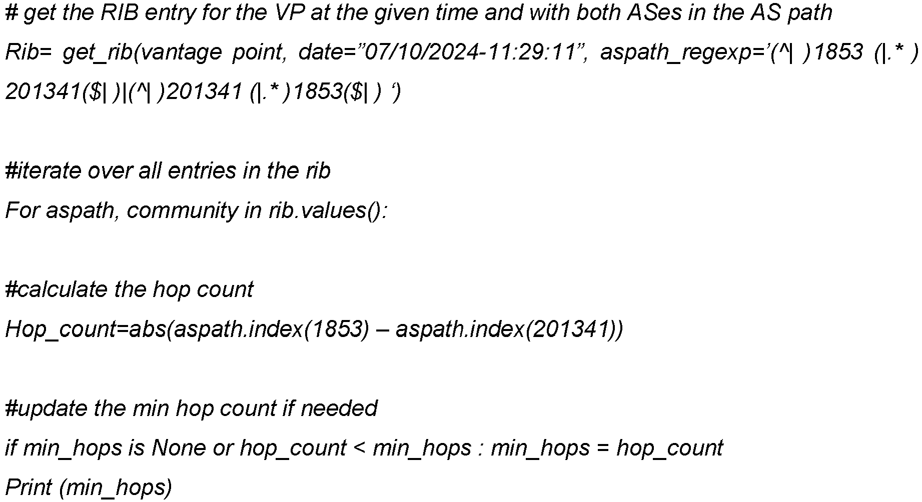

This software code answers the following question: "What is the minimum number of AS hops between AS201341 and AS1853 based on the data collected from VP 193.203.0.63 at 11:29:11 AM on July Tenth, 2024" and print the retrieved number of AS hops.

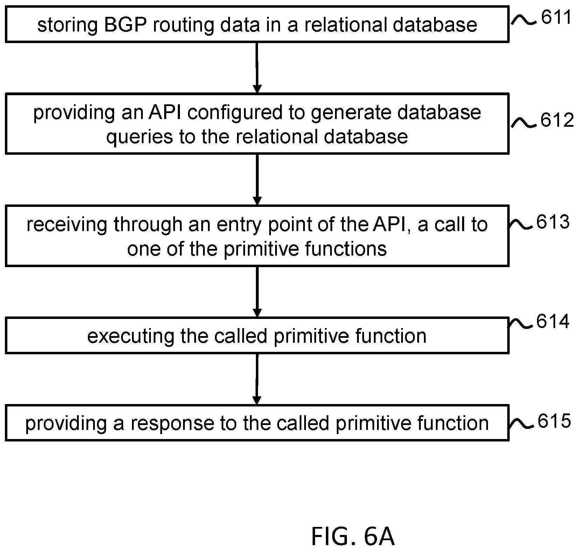

FIG. 6A shows a flowchart of a method for storing and retrieving BGP routing data according to one or more example embodiments. The steps of the method may be implemented by a data collection platform 302 in a system 300A, 300B for storing and querying BGP routing data according to any example described herein.

While the steps are described in a sequential manner, the person skilled in the art will appreciate that some steps may be omitted, combined, performed in different order and / or in parallel.

The method includes: storing (611) BGP routing data in a relational database. The relational database may be implemented as described herein, for example by reference to FIG. 2A-2C.

The relational database comprises a set of tables configured to store lossless compressed BGP routing data. Any embodiment disclosed here may be used for the relational database.

In one or more or all embodiments, the set of tables includes at least one indirection table, wherein there is an indirection table per BGP route attribute among a set of at least one BGP route attribute, each indirection table storing distinct values of the considered BGP route attribute and associating each of the stored values with a unique identifier.

In one or more or all embodiments, the set of tables includes at least one main table storing BGP routing data sets, each BGP routing data set including at least one unique identifier from at least one indirection table but not the associated BGP route attribute value;

The method includes: providing (612), an application program interface, API, configured to generate database queries to the relational database.

In one or more or all embodiments, the API provides entry points corresponding respectively to primitive functions. Each primitive function is configured to receive one or more search criteria as input and to search for zero or more matching BGP routing data sets by (i) searching for matching BGP route attribute values (if any) stored in the at least one indirection table and (ii) retrieving the unique identifiers associated with the matching BGP route attribute values if any to search for zero or more matching BGP routing data sets in the at least one main table.

In one or more or all embodiments, the API is adapted to convert a call to any of the primitive functions into at least one database query to one or more of the set of tables.

The method may include: receiving (613), through an entry point of the API, a call to one of the primitive functions, executing (614) the called primitive function and providing (614) a response to the called primitive function.

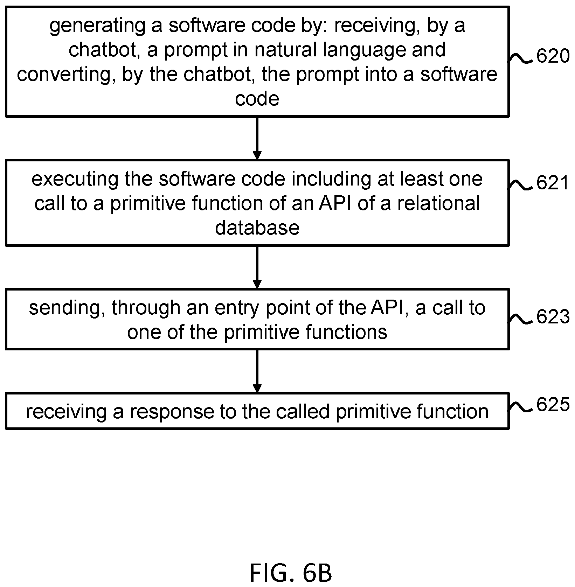

FIG. 6B shows a flowchart of a method for querying BGP routing data according to one or more example embodiments. The steps of the method may be implemented by a user device 301 of a system 300A, 300B for storing and querying BGP routing data according to any example described herein.

While the steps are described in a sequential manner, the person skilled in the art will appreciate that some steps may be omitted, combined, performed in different order and / or in parallel.

In one or more or all embodiments, the BGP routing data may be stored in a relational database, the relational database comprising a set of tables configured to store lossless compressed BGP routing data.

The relational database may be implemented as described herein, for example by reference to FIG. 2A-2C.

In one or more or all embodiments, the set of tables includes at least one indirection table, wherein there is an indirection table per BGP route attribute among a set of at least one BGP route attribute, each indirection table storing distinct values of the considered BGP route attribute and associating each of the stored values with a unique identifier;

In one or more or all embodiments, the set of tables includes at least one main table storing BGP routing data sets, each BGP routing data set including at least one unique identifier from at least one indirection table but not the associated BGP route attribute value.

In one or more or all embodiments, an application program interface, API, is provided for the relational database, wherein the API is configured to generate database queries to the relational database

In one or more or all embodiments, the API provides entry points corresponding respectively to primitive functions.

In one or more or all embodiments, each primitive function is configured to receive one or more search criteria as input and to search for zero or more matching BGP routing data sets by (i) searching for matching BGP route attribute values (if any) stored in the at least one indirection table and (ii) retrieving the unique identifiers associated with the matching BGP route attribute values if any to search for the zero or more matching BGP routing data sets in the at least one main table,

In one or more or all embodiments, the API is adapted to convert a call to any of the primitive functions into at least one database query to one or more of the set of tables.

The method comprises: generating (620) and/or executing (621) a software code including at least one call to a primitive function of the API, to query the relational database.

In one or more or all embodiments, generating the software code may include: receiving by a chatbot a prompt in natural language and converting, by the chatbot, the prompt into a software code.

The chatbot may be configured and optimised according to any embodiment described herein.

Executing the software code may include: sending (623), through an entry point of the API, a call to one of the primitive functions, and receiving (625) a response to the called primitive function. The response may include BGP data matching one or more search criteria defined in the prompt.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although steps of a method or process may be described in a sequential manner, some of the steps may be performed in parallel, concurrently or simultaneously. Also, some steps may be omitted, combined or performed in different order.

One or more or all operation(s) of a method, process, function, engine, block, step described herein may be implemented in hardware, software, firmware, middleware, microcode, or any suitable combination thereof.

When implemented in software, firmware, middleware or microcode, instructions to perform the considered operation(s) may be stored in a computer readable medium that may be or not included in a computing device (or respectively a computing system) configured to execute the instructions. The instructions may be transmitted over the computer-readable medium and be loaded onto the computing device (or respectively computing system). The instructions are configured to cause the computing device (or respectively computing system) to perform the considered operation(s). For example, as mentioned above, at least one memory may include or store instructions, the at least one memory and the instructions may be configured to, with at least one processor, cause the computing device (or respectively computing system) to perform the considered operation(s).

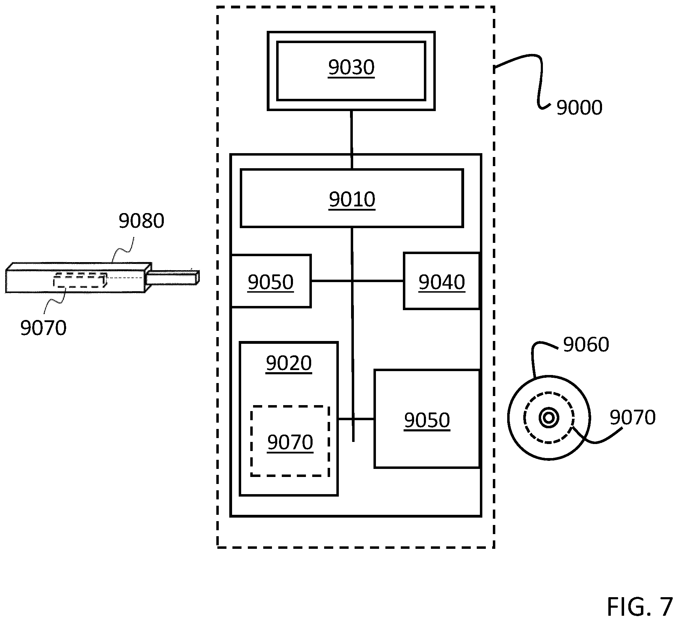

FIG. 7 illustrates an example embodiment of an apparatus 9000 as example of a computing device that may be used in any system described herein.

An instance of the apparatus 9000 may be configured to perform one or more functions (e.g., functions of a software tool 305, chatbot 306, code editor 307, execution environment 310) of a user device 301 disclosed herein. In alternative or in combination, the apparatus 9000 may be configured to perform one or more or all steps of any method for querying BGP routing data disclosed herein.

An instance of the apparatus 9000 may be configured to perform one or more functions (e.g, functions of an API 320, relational database 330) of a data collection platform 302 disclosed herein. In alternative or in combination, the apparatus 9000 may be configured to perform one or more or all steps of a method for storing and providing BGP routing data disclosed herein.

As represented schematically, the apparatus 9000 may include at least one processor 9010 and at least one memory 9020. The apparatus 9000 may include one or more communication interfaces 9040 (e.g., network interfaces for access to a wired / wireless network, including Ethernet interface, WIFI interface, etc) connected to the processor and configured to communicate via wired / non wired communication link(s). The apparatus 9000 may include user interface devices 9030 (e.g., keyboard, mouse, display screen, etc) connected with the processor. The apparatus 9000 may further include one or more media drives 9050 for reading a computer-readable storage medium (e.g., digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), a Graphical Processing Unit (GPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid-state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause an apparatus to perform the considered function(s). The means may include circuitry (e.g., processing circuitry) configured to perform the considered function(s).

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

Although aspects have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

## Claims

1. A system configured to store and query Border Gateway Protocol, BGP, routing data, the system comprising:
- a relational database (330) comprising a set of tables configured to store lossless compressed BGP routing data ,
wherein the set of tables includes at least one indirection table, wherein there is an indirection table per BGP route attribute among a set of at least one BGP route attribute, each indirection table storing distinct values of the considered BGP route attribute and associating each of the stored values with a unique identifier;
wherein the set of tables includes at least one main table storing BGP routing data sets, each BGP routing data set including at least one unique identifier from at least one indirection table but not the associated BGP route attribute value;
- an application program interface, API (320), configured to generate database queries to the relational database,
wherein the API provides entry points corresponding respectively to primitive functions, wherein each primitive function is configured to receive one or more search criteria as input and to search for zero or more matching BGP routing data sets by (i) searching for matching BGP route attribute values stored in the at least one indirection table and (ii) retrieving the unique identifiers associated with the matching BGP route attribute values if any to search for zero or more matching BGP routing data sets in the at least one main table,
wherein the API is adapted to convert a call to any of the primitive functions into at least one database query to one or more of the set of tables.

2. The system of claim 1, wherein the set of tables comprises a first indirection table storing, in each row among a first set of rows, a unique identifier associated with a group of IP prefixes used in BGP updates;
wherein the at least one main table includes a BGP update table storing, in each row among a second set of rows, a BGP update as a dataset including: a timestamp and a first identifier associated with a group of IP prefixes for which the considered BGP update is applicable.

3. The system of claim 1 or 2, wherein the set of at least one BGP route attribute includes the Autonomous System, AS, path attribute and the Community attribute, wherein the at least one indirection table comprises:
a second indirection table storing, in each row among a set of rows, a unique identifier associated with a value of the AS path attribute; and
a third indirection table storing, in each row among a set of rows, a unique identifier associated with a value of the Community attribute;
wherein each dataset in a row among the second set of rows in the BGP update table further includes: a second identifier associated with a value of the AS path attribute and a third identifier associated with a value of the Community attribute.

4. The system of claim 3,
wherein the at least one main table includes a RIB reference table storing, in each row among a third set of rows, a RIB entry of a reference Routing Information Base, RIB, dump as a dataset including: a timestamp, an IP prefix, an identifier associated with a value of the AS path attribute and an identifier associated with a value of the Community attribute.

5. The system of claim 4,
wherein the at least one main table includes a RIB difference table storing, in each row among a fourth set of rows, a RIB entry of a RIB difference that differs from the reference RIB dump as a dataset including: a timestamp, an IP prefix, an identifier associated with a value of the AS path attribute and an identifier associated with a value of the Community attribute.

6. The system of any of claims 3 to 5, wherein the primitive functions comprise a first primitive function configured to retrieve, from the BGP update table, a list of BGP updates matching one or more criteria defined in parameters of the first primitive function.

7. The system of any of claims 5 to 6, wherein the primitive functions comprise a second primitive function configured to search, in at least one of the RIB reference table and the RIB difference table, for zero or more matching RIB entries, wherein the second primitive function accepts multiple parameters to define one or more search criteria and/or to filter the retrieved list.

8. The system of any of claims 3 to 7, wherein the relational database includes BGP routing data for several vantage points, wherein the primitive functions comprise a third primitive function configured to search for zero or more matching vantage points, wherein the third primitive function accepts multiple parameters used to define one or more search criteria and/or to filter the retrieved list.

9. The system of claim 1, wherein the relational database is configured to use an index defining a tree-based data structure for searching for unique identifiers associated with a given BGP attribute in the at least one main table.

10. The system of any of claims 1 to 9,
comprising a chatbot (306) configured to receive a prompt in natural language and to convert the prompt into a software code, wherein the software code comprises at least one call to at least one of the primitive functions.

11. The system of claim 10, wherein the chatbot is based on a Large Language Model, LLM configured to convert a question in natural language into a corresponding software code;
wherein the LLM is trained using a ground truth dataset that includes a set of elementary questions in natural language along their corresponding software codes,
wherein each of the corresponding software codes comprises at least one call to at least one of the primitive functions.

12. The system of claim 11, wherein the set of elementary questions is inferred from a list of human generated texts pertaining to BGP routing data.

13. The system of claim 11 or 12, wherein each of the elementary questions defines one or more search criteria, wherein the elementary questions are adapted to be combined to form complex questions combining the one or more search criteria of the combined elementary questions.

14. A method for storing and providing Border Gateway Protocol, BGP, routing data, the method comprising:
- storing (611) BGP routing data in a relational database, the relational database comprising a set of tables configured to store lossless compressed BGP routing data,
wherein the set of tables includes at least one indirection table, wherein there is an indirection table per BGP route attribute among a set of at least one BGP route attribute, each indirection table storing distinct values of the considered BGP route attribute and associating each of the stored values with a unique identifier;
wherein the set of tables includes at least one main table storing BGP routing data sets, each BGP routing data set including at least one unique identifier from at least one indirection table but not the associated BGP route attribute value;
- providing (612), an application program interface, API, configured to generate database queries to the relational database,
wherein the API provides entry points corresponding respectively to primitive functions, wherein each primitive function is configured to receive one or more search criteria as input and to search for zero or more matching BGP routing data sets by (i) searching for matching BGP route attribute values stored in the at least one indirection table and (ii) retrieving the unique identifiers associated with the matching BGP route attribute values if any to search for zero or more matching BGP routing data sets in the at least one main table,
wherein the API is adapted to convert a call to any of the primitive functions into at least one database query to one or more of the set of tables.

15. A method for querying Border Gateway Protocol, BGP, routing data,
wherein the BGP routing data is stored in a relational database, the relational database comprising a set of tables configured to store lossless compressed BGP routing data,
wherein the set of tables includes at least one indirection table, wherein there is an indirection table per BGP route attribute among a set of at least one BGP route attribute, each indirection table storing distinct values of the considered BGP route attribute and associating each of the stored values with a unique identifier;
wherein the set of tables includes at least one main table storing BGP routing data sets, each BGP routing data set including at least one unique identifier from at least one indirection table but not the associated BGP route attribute value;
the method comprising:
generating (620) and/or executing (621) a software code including at least one call to a primitive function of an application program interface, API, to query the relational database, wherein the API is configured to generate database queries to the relational database,
wherein the API provides entry points corresponding respectively to primitive functions, wherein each primitive function is configured to receive one or more search criteria as input and to search for zero or more matching BGP routing data sets by (i) searching for matching BGP route attribute values stored in the at least one indirection table and (ii) retrieving the unique identifiers associated with the matching BGP route attribute values if any to search for zero or more matching BGP routing data sets in the at least one main table,
wherein the API is adapted to convert a call to any of the primitive functions into at least one database query to one or more of the set of tables.
